(19) Europäisches Patentamt / European Patent Office / Office européen des brevets

(11) **EP 3 848 597 B1**

(12) **EUROPEAN PATENT SPECIFICATION**

(45) Date of publication and mention of the grant of the patent:
**19.07.2023 Bulletin 2023/29**

(21) Application number: **19857552.4**

(22) Date of filing: **29.08.2019**

(51) International Patent Classification (IPC):
**F16C 19/52** $^{(2006.01)}$     **F16C 19/16** $^{(2006.01)}$
**F16C 41/00** $^{(2006.01)}$     **F16N 29/00** $^{(2006.01)}$

(52) Cooperative Patent Classification (CPC):
**F16C 19/525; F16C 19/163; F16C 19/548;**
**F16C 41/00;** F16C 2322/39

(86) International application number:
**PCT/JP2019/033927**

(87) International publication number:
**WO 2020/050129 (12.03.2020 Gazette 2020/11)**

(54) **BEARING DEVICE**

LAGERVORRICHTUNG

DISPOSITIF DE ROULEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.09.2018 JP 2018164469**

(43) Date of publication of application:
**14.07.2021 Bulletin 2021/28**

(73) Proprietor: **NTN Corporation**
**Osaka-shi, Osaka 550-0003 (JP)**

(72) Inventor: **HASHIZUME, Shohei**
**Kuwana-shi, Mie 511-8678 (JP)**

(74) Representative: **Corizzi, Valérie**
**PACT-IP**
**37, rue Royale**
**92210 Saint-Cloud (FR)**

(56) References cited:
JP-A- 2009 068 533     JP-A- 2009 068 533
JP-A- 2010 149 244     JP-A- 2017 090 318
JP-A- 2017 090 318     JP-A- 2017 187 451
US-A1- 2017 291 204

**Description**

CROSS REFERENCE TO THE RELATED APPLICATION

This application is based on and claims Convention priority to Japanese patent application No. 2018-164469, filed September 3, 2018.

BACKGROUND OF THE INVENTION

(Field of the Invention)

The present invention relates to a bearing apparatus (bearing device) configured to rotatably support, for example, a spindle of a machine tool or the like.

(Description of Related Art)

Bearings for spindles of machine tools are often used at high speed and with low load, and such bearings are commonly constituted by angular ball bearings. Lubrication of the bearings may be performed by air-oil (oil-mist) lubrication or grease lubrication. The air-oil lubrication constantly supplies new lubricating oil from an external source and thus can maintain a stable lubrication state for a long period of time. The grease lubrication is excellent in economy because it does not require auxiliary equipment and piping and is environmentally friendly because it produces extremely less mist.

Bearings used in a higher speed range (for example, a range of a dn value of a million or higher, which is calculated by multiplying an inner diameter of an inner ring by the number of rotations), such as those used for spindles of machining centers of machine tools, require more stable operation. Due to various causes as follows, however, the bearings may have surface roughness or peeling on their raceway surfaces and/or abnormality of cages, resulting in an excessive temperature rise:

- improper supply and discharge of lubricating oil in air-oil lubrication (excessively small or large supply of oil, insufficient discharging);
- deterioration of lubricating grease filled inside a bearing;
- intrusion of coolant, water, or foreign matter into a bearing rolling part; and
- shortage of oil film due to excessively large preload, that is, an increase in contact pressure (contact surface pressure) at a rolling contact part.

In order to prevent an excessive temperature rise in a bearing due to above causes, the following technologies (1) to (3) are known:

(1) a technology of detecting abnormality based on state monitoring for measuring the temperature near a bearing from a housing side and the measured temperature;
(2) a technology of incorporating a lubricating-oil supply pump and a non-contact temperature sensor into a spacer adjacent to a bearing, and supplying lubricating oil to an inside of a bearing using the lubricating-oil supply pump according to a measurement value of the temperature of a bearing lubrication part measured by the temperature sensor (Patent Document 1); and
(3) use of a heat flux sensor employing a technology of detecting, instead of a temperature change, a heat flux generated by a temperature difference between front and back sides of the sensor (Patent Document 2). The heat flux sensor is more sensitive than temperature sensors such as a non-contact temperature sensor and a thermocouple, which are used for measuring the temperature of inner and outer rings of a bearing, and the sensor output is more responsive.
(4) In addition, the Applicant of the present application has proposed a technology of detecting a temperature change inside a bearing during operation at an early stage using the above heat flux sensor disposed in the bearing to prevent malfunction of the bearing (JP Patent Application No. 2018-22950).

[Related Document]

[Patent Document]

[Patent Document 1] JP Laid-open Patent Publication No. 2017-26078
[Patent Document 2] JP Laid-open Patent Publication No. 2016-166832
[Patent Document 3] JP 2009 068533 A

The conventional technologies mentioned above have the following problems associated with an excessive temperature rise in bearings.

Problem of Conventional Technology (1)

During an excessive temperature rise in a bearing, it occurs more often as an instantaneous and rapid temperature rise, as compared with that during normal high-speed operation. For this reason, for example, even if the temperature near the bearing is measured from the housing side, it is difficult to detect an instantaneous and rapid temperature rise in the bearing.

Problem of Conventional Technology (2)

Similarly, a temperature sensor incorporated in a spacer adjacent to a bearing also has the above problem. Further, where the temperature sensor incorporated in the spacer is of a non-contact type, it is difficult to accurately measure the temperature because of the difficulty in measuring the temperature on a metal surface which is greatly influenced by lubricating oil inside the bearing and has low infrared emissivity.

Problems of Conventional Technologies (3) and (4)

Where a temperature change inside a bearing during operation is to be detected at an early stage using a heat flux sensor which employs a technology of detecting, instead of a temperature change, a heat flux generated by a temperature difference between front and back sides of the sensor, it is difficult to determine whether an excessive temperature rise is occurring in the bearing only on the basis of an output of the heat flux sensor because a spindle of a machine tool has greatly varying rotation speed during operation, which causes large air flow inside the bearing.

SUMMARY OF THE INVENTION

An object of the present invention is to provide a bearing apparatus capable of accurately detecting an instantaneous and rapid temperature rise in a rolling bearing and determining abnormality in the rolling bearing on the basis of the detection result thereby.

A bearing apparatus of the present invention includes:

a rolling bearing;
an inner spacer axially adjacent to an inner ring of the rolling bearing;
an outer spacer axially adjacent to an outer ring of the rolling bearing;
a heat flux sensor disposed on a stationary-side raceway ring which is a fixed raceway ring of the inner and outer rings, or on a stationary-side spacer of the inner and outer spacers, and configured to detect a heat flux between the inner and outer rings;
a rotation sensor configured to detect a rotation speed of the rolling bearing; and
an abnormality determination section configured to determine abnormality in the rolling bearing on the basis of a relation between the rotation speed and the heat flux which follows or varies with the rotation speed.

The term "heat flux" means the amount of heat passing per unit area per unit time. In the present specification, the term "rotation speed" has the same meaning as the number of rotation per unit time. The relation between the rotation speed and the heat flux may be defined by, for example, one or both of testing and simulation.

According to this constitution, the heat flux sensor is used to measure a temperature change inside the bearing during operation of the bearing. The heat flux sensor is a sensor which uses the Seebeck effect to convert a heat flux into an electrical signal, and an output voltage is generated due to a slight temperature difference between front and back sides of the sensor. The heat flux sensor is more sensitive than temperature sensors such as a non-contact temperature sensor or a thermocouple and follows a change in the heat inside the bearing associated with variation of the rotation speed in a timely manner. Where the heat flux sensor is disposed near the bearing on the stationary-side raceway ring or the stationary-side spacer, a heat flux of the heat flowing between the inner and outer rings of the bearing may be directly detected. Where the heat flux sensor is disposed, for example, near the axial center of the stationary-side spacer, a heat flux of the heat flowing between the inner and outer rings of the bearing may be indirectly detected.

The abnormality determination section is configured to determine abnormality in the rolling bearing on the basis of the relation between the rotation speed and the heat flux which follows the rotation speed. The abnormality determination section is configured to monitor the relation between the rotation speed and the heat flux constantly or for a predetermined period of time and to determine that the rolling bearing has abnormality when there is inconsistency in the relation between them. For example, the abnormality determination section may determine that the rolling bearing has abnormality when the heat flux rapidly changes in spite of the fact that the rotation speed is constant. For example, the abnormality determination section may determine that the rolling bearing has abnormality when the heat flux does not follow the rotation speed in spite of the fact that the detected rotation speed is changing. In this way, it is possible to accurately detect an instantaneous and rapid temperature rise in the rolling bearing and to determine abnormality in the rolling bearing on the basis of the detection result thereby. Where it is determined that the rolling bearing has abnormality, it is possible to take a control action, such as to stop the rotation of the bearing apparatus.

The abnormality determination section may be configured to determine abnormality in the rolling bearing on the basis of a parameter calculated by taking a time derivative of the heat flux detected by the heat flux sensor. Use of such a parameter of a time derivative of the heat flux makes it possible to precisely detect an instantaneous and rapid temperature rise.

The stationary-side spacer may include a protruding part protruding from an axial side surface of the stationary-side spacer to a position between the inner and outer rings, and the heat flux sensor may be disposed at the protruding part. Where the heat flux sensor is disposed on the stationary-side raceway ring of the rolling bearing, there may be a problem of an increased processing cost of the stationary-side raceway ring or the like. Where the heat flux sensor is disposed on the stationary-side spacer, this problem can be solved, and the heat flux sensor can be easily installed. In addition, since the heat flux sensor is disposed at the protruding part which protrudes to a position between the inner and outer rings, a temperature change inside the bearing during operation can be directly detected.

The protruding part may also serve as a nozzle configured to discharge lubricating oil to the rolling bearing. In this case, an existing nozzle for discharging lubricating oil can be used to dispose the heat flux sensor, which makes it possible to reduce the cost as compared with the case where, for example, a dedicated component is used to dispose the heat flux sensor.

The bearing apparatus may include a temperature sensor configured to detect temperature of the stationary-side spacer or the stationary-side raceway ring, and the abnormality determination section may be configured to determine if the temperature sensor, the heat flux sensor and the rotation sensor are functioning normally on the basis of a relation between the temperature detected by the temperature sensor, the rotation speed and the heat flux. In detection of the rotation speed and the heat flux, it is important to make sure that the respective sensors are functioning normally. The Applicant of the present application has conducted a test and confirmed that, as the rotation speed of the bearing apparatus is increased stepwisely from a low-speed range to an extremely high-speed range when the respective sensors are functioning normally, the temperature, the rotation speed and the heat flux change in a predetermined relation. In view of this test result, the abnormality determination section may automatically determine that the respective sensors are functioning normally in an initial diagnosis or the like, so that the result of the determination of whether the rolling bearing has abnormality can be more objectively employed.

Any combination of at least two constructions, disclosed in the appended claims should be construed as included within the scope of the present invention. In particular, any combination of two or more of the appended claims should be equally construed as included within the scope of the present invention.

BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views.

Fig. 1 is a sectional view illustrating a positional relation between a heat flux sensor and rolling bearings in a bearing apparatus according to an embodiment of the present invention;

Fig. 2 is an enlarged sectional view showing the heat flux sensor and one rolling bearing in a partially enlarged manner;

Fig. 3 is a sectional view schematically showing a structure of a tester for evaluating the bearing apparatus;

Fig. 4 illustrates various sensor outputs from the bearing apparatus;

Fig. 5 illustrates a relation between heat flux, temperature, and rotation speed in an acceleration/deceleration test;

Fig. 6 illustrates the relation between heat flux, temperature, and rotation speed in the acceleration/deceleration test;

Fig. 7 illustrates a relation between heat flux, temperature, and rotation speed in a reproducing test of a bearing abnormality state;

Fig. 8 is a sectional view illustrating a positional relation between a heat flux sensor and rolling bearings in a bearing apparatus according to another embodiment of the present invention; and

Fig. 9 is a sectional view illustrating a positional relation between a heat flux sensor and a rolling bearing in a bearing apparatus according to yet another embodiment of the present invention.

DESCRIPTION OF THE EMBODIMENTS

First Embodiment

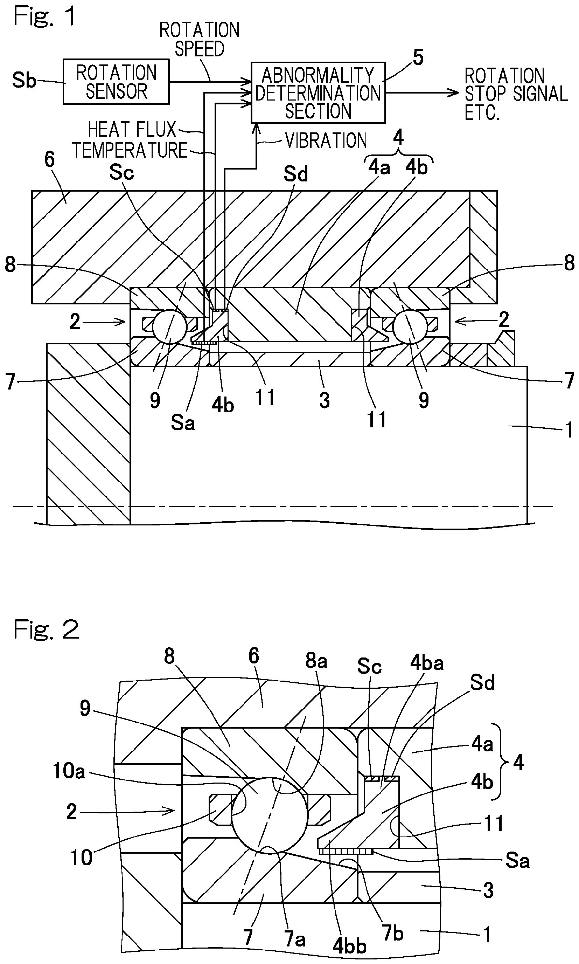

A bearing apparatus according to an embodiment of the present invention will be described with reference to Fig. 1 to Fig. 7. As shown in Fig. 1, the bearing apparatus rotatably supports, for example, a spindle 1 of a machine tool. The spindle 1 has an end portion to which a tool or a chuck for a workpiece or the like (not illustrated). The bearing apparatus includes: rolling bearings 2; inner and outer spacers 3, 4; sensors; and an abnormality determination section 5 which will be described later. The spindle 1, which is a rotating body, is rotatably supported by a housing 6 through the rolling bearings 2 and the inner and outer spacers 3, 4. There are two rows of the rolling bearings 2 constituted by angular ball bearings combined in a back-to-back arrangement, and the inner and outer spacers 3, 4 are disposed between the angular ball bearings in an axial direction of the spindle 1. The inner and outer spacers 3, 4 refer to an inner ring spacer 3 and an outer ring spacer 4, respectively. Note that the rolling bearings 2 may be changed to a single row of an angular ball bearing, and, in such a case, axial end portions of the inner and outer spacers 3, 4 on single axial side are located adjacent to the inner and outer rings of the rolling bearing, respectively.

Rolling Bearing 2

As shown in Fig. 2, each of the rolling bearings 2 includes: an inner ring 7, an outer ring 8 which is a stationary-side raceway ring; a plurality of rolling elements 9 interposed between raceway surfaces 7a, 8a of the inner and outer rings 7, 8; and a cage 10 for retaining the rolling elements 9. The rolling elements 9 may be e.g., balls and are retained in pockets 10a of the cage 10. An outer peripheral surface of the outer ring 8 is fitted to a fitting hole of the housing 6, and an inner peripheral surface of the inner ring 7 is fitted to an outer peripheral surface of the spindle 1. The inner ring 7 has an inclined surface part 7b on its outer diametric surface on an opposite side from a loaded side (i.e., on a side of a back surface of the bearing), the inclined surface part extending to the raceway surface 7a. The inclined surface part 7b has a tapered shape having a gradually decreasing diameter from the side of the raceway surface 7a to the side of the inner ring spacer 3. With the respective rolling bearings 2 as well as the inner ring spacer 3 and the outer ring spacer 4 (which will be described later) incorporated into the housing 6 and with the spindle 1, a fixed-position preload having a predetermined pressure or a fixed-pressure preload is applied to the rolling bearings 2.

Inner Ring Spacer 3 and Outer Ring Spacer 4

As shown in Fig. 1, the inner ring spacer 3 is adjacently disposed between end faces of the inner rings of the two rows of the rolling bearings 2, 2. An inner peripheral surface of the inner ring spacer 3 is fitted to the outer peripheral surface of the spindle 1. The outer ring spacer 4, which is a stationary-side spacer, includes an outer ring spacer body 4a and protruding parts 4b. The outer ring spacer body 4a is adjacently disposed between end faces of the outer rings of the two rows of the rolling bearings 2, 2, and an outer peripheral surface of the outer ring spacer body 4a is fitted into the fitting hole of the housing 6. The outer ring spacer body 4a has opposite side surfaces each formed with an annular recess 11 for retaining one of the protruding parts 4b.

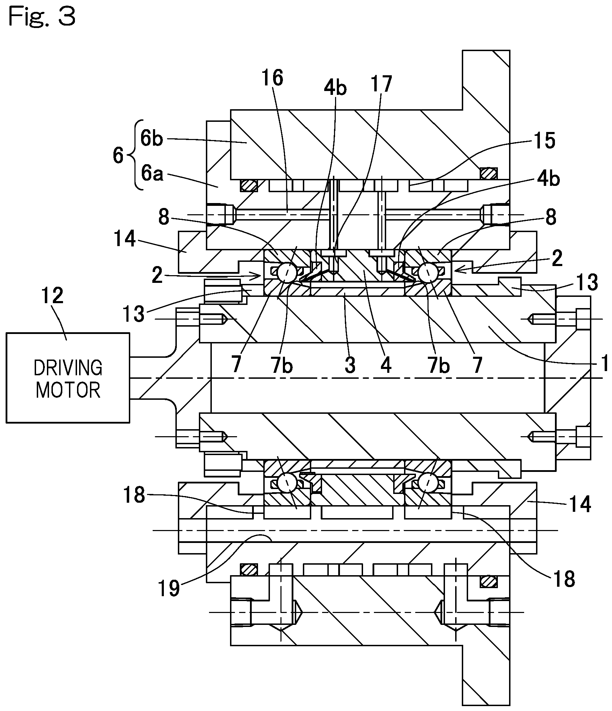

As shown in Fig. 2, each of the protruding parts 4b is a ring-shaped member, and the heat flux sensor Sa is disposed on one of the protruding parts. Each protruding part also serves as a nozzle (Fig. 3) for discharging lubricating oil (air oil) to one of the rolling bearing 2. The protruding part 4b includes: a protrusion base portion 4ba fitted into the recess 11; and a protrusion tip portion 4bb protruding from the protrusion base portion 4ba toward the inclined surface part 7b between the inner and outer rings 7, 8. The protrusion tip portion 4bb, however, is located apart from the cage 10 and the inclined surface part 7b with respective predetermined gaps therebetween so as not to cause interference with the cage 10 and the inclined surface part 7b. Although the outer ring spacer body 4a and the protruding parts 4b of this example are provided as separate components and are assembled into the outer ring spacer 4, the outer ring spacer body 4a and the protruding parts 4b may be integrally formed from a same material.

Sensors and the Like

As shown in Fig. 1, the sensors and the like include the heat flux sensor Sa, a rotation sensor Sb, a temperature sensor Sc, and a vibration sensor Sd.

Heat Flux Sensor Sa

As the spindle 1 rotates, each rolling bearing 2 for supporting the spindle 1 produces a temperature difference between the inner ring 7 and the outer ring 8 (hereinafter, referred to as "temperature difference between the inner and outer rings"). This is mainly caused by a difference in heat dissipation capacity of the inner ring 7 and the outer ring 8, and the inner ring 7 which tends to dissipate less heat shows higher temperature than that of the outer ring 8. As the rolling bearing 2 rotates at higher speed, the temperature difference between the inner and outer rings increases, causing an increase in the preload inside the bearing and contact pressure on the rolling surfaces in association therewith. The temperature difference between the inner and outer rings also increases when lubrication is insufficient or when abnormality occurs inside the bearing due to insufficient lubrication. The heat flux sensor Sa used in the present embodiment is intended to catch a smaller change than that detected by a general temperature sensor and is used to measure a heat flux from the inner ring 7, having relatively higher temperature, to the outer ring 8 in order to detect abnormality due to temperature difference between the inner and outer rings.

The heat flux sensor Sa is disposed on an inner peripheral surface of one or both of the protruding parts 4b of the outer ring spacer 4. The heat flux sensor Sa is disposed so as not to cause interference with the inclined surface part 7b (Fig. 2) and the outer peripheral surface of the inner ring spacer 3. The heat flux sensor Sa is a sensor which uses the Seebeck effect to convert a heat flux into an electrical signal, and an output voltage is generated due to a slight temperature difference between front and back sides of the sensor. The heat flux sensor Sa of the present embodiment generates an output voltage due to a temperature difference between the temperature of the outer ring spacer 4 and the temperature of rotation atmosphere of the inner ring 7 generated by the rotation of the inner ring 7, the rolling elements 9 and the cage 10 etc.

Rotation Sensor Sb

The rotation sensor Sb is configured to detect the rotation speed of the rolling bearing 2. It should be noted that the rotation sensor Sb may be a sensor configured to directly detect the rotation speed of the inner ring 7 which is a rotary-side raceway ring or the inner ring spacer 3 which is a rotary-side spacer, or may be a rotation speed calculation unit configured to calculate the rotation speed by taking a time derivative of a motor angle detected by a non-illustrated resolver or a non-illustrated magnetic encoder or the like incorporated into a driving motor (a rotation driving source) which will be described later.

Temperature Sensor Sc

The temperature sensor Sc is configured to detect heat generated in the rolling bearing 2 due to rotation or cutting load of the spindle 1. For example, the temperature sensor Sc is disposed at a position near an end face of the outer ring in one recess 11 of the spacer body 4a. In case where the temperature of a bearing is measured during operation, typically, the temperature of an outer peripheral surface of a housing is measured because of ease of installation of a sensor. However, since there is a cooling path between the rolling bearing and the outer peripheral surface of the housing, the detected temperature is lower, as compared with a case where the temperature of the bearing is directly measured. In addition, since the temperature of the housing having a large heat capacity is measured, even if rapid heat generation occurs in the rolling bearing, it takes time before the temperature rise is detected. For this reason, it has been difficult to immediately catch rapid heat generation in the rolling bearing using a temperature sensor for measuring the temperature of the outer peripheral surface of the housing.

Therefore, the temperature sensor Sc of this embodiment is configured to detect the temperature of the outer ring spacer 4 which is the stationary-side spacer or of the outer ring 8 which is the stationary-side raceway ring. The temperature sensor Sc may be a non-contact temperature sensor, a thermocouple, a thermistor or the like. It is also possible to detect the temperature of the outer ring spacer 4 using the temperature sensor Sc disposed on the spacer body 4a of the outer ring spacer 4. Alternatively, it is possible to detect the temperature of the outer ring 8 using the temperature sensor Sc disposed in a sensor installation space defined in the fitting hole of the housing 6 so as to face the outer peripheral surface of the outer ring.

Vibration Sensor Sd

The vibration sensor Sd is configured to measure vibration of the rolling bearing 2 due to surface roughness, peeling, or indentation or the like of the bearing raceway surfaces during operation. For example, the vibration sensor Sd is disposed in one recess 11 of the spacer body 4a. In general, in case where vibration of a bearing is measured during operation, the measurement is often performed using a vibrometer attached to an outer peripheral surface of a housing because of ease of installation, as with the temperature sensor described above. However, since the vibration of the bearing during operation is measured over the housing, the vibration originating from the rolling bearing is attenuated. Therefore, it is difficult to detect abnormality in the rolling bearing unless the abnormality has progressed and causes a greater level of vibration. In contrast, the present bearing apparatus incorporates the vibration sensor Sd on the outer ring spacer 4 adjacent to the rolling bearing 2, so that abnormality at an initial stage can be sensitively measured even if the abnormality causes a low level of vibration.

Abnormality Determination Section 5

The heat flux sensor Sa is more sensitive than temperature sensors such as a non-contact temperature sensor and a thermocouple, and follows a change in the heat inside the bearing associated with variation of the rotation speed in a timely manner. The abnormality determination section 5 is configured to determine abnormality in the rolling bearing 2 on the basis of a relation between the rotation speed and the heat flux which follows the rotation speed. The abnormality determination section 5 is configured to monitor the relation between the rotation speed and the heat flux constantly or for a predetermined period of time during operation of the bearing and to determine that the rolling bearing 2 has abnormality when there is inconsistency in the relation between them. Specifically, the abnormality determination section 5 determines that the rolling bearing 2 has abnormality on the basis of a parameter ($\Delta Q/\Delta t$) calculated by taking a time derivative of the heat flux detected by heat flux sensor Sa as described later.

Performance Evaluation Test

State detection performance of a bearing apparatus according to this embodiment was evaluated using a tester simulating a machine tool spindle, which included the bearing apparatus incorporated therein. Table 1 shows test conditions of the performance evaluation test. The test bearings used were extremely high-speed angular ball bearings (HSE type, manufactured by NTN Corporation) with ceramic balls.

[Table 1]

| Test bearing | $\phi$ 70 $\times$ $\phi$ 110 $\times$ 20 Product equivalent to 5S-2LA-HSE014 (extremely high-speed angular ball bearing with ceramic balls) |
|---|---|
| Preload type | Fixed-position preload (Post-assembly preload: 750 N) |
| Rotation speed | 0 to 16000 min$^{-1}$ |
| Lubrication type | Air-oil lubrication |
| Oil supply | 0.03 mL / 10 min |
| Lubricating oil | ISO VG32 |
| Lubricating air amount | 30 NL/min |
| Outer cylinder cooling | With cooling (synchronized with room temperature) |
| Spindle attitude | Horizontal |

Structure of Tester

As shown in Fig. 3, the tester is constituted such that the spindle 1 is rotatably supported by the housing 6 through the bearing apparatus. A driving motor 12 is coupled to an axial end portion of the spindle 1, and the spindle 1 is rotationally driven about its axis by the driving motor 12. The inner and outer rings 7, 8 are fixed to the spindle 1 and the housing 6 by an inner ring presser 13 and an outer ring presser 14, respectively.

The housing 6 has a double structure including an inner peripheral housing 6a and an outer peripheral housing 6b, and there is a cooling medium flow path 15 formed between the inner and outer peripheral housings 6a, 6b. The inner peripheral housing 6a includes an air-oil supply path 16 which is communicated with an air-oil supply opening 17 of the outer ring spacer 4. Air oil supplied to the air-oil supply opening 17 is discharged from discharge holes of the protruding parts 4b, which also serve as nozzles, and is injected onto the inclined surface parts 7b of the inner rings 7 for lubrication of the rolling bearings 2. The inner peripheral housing 6a is formed with air-oil exhaust grooves 18 near the locations where the respective rolling bearings 2 are fitted as well as an air-oil exhaust path 19 opened to atmosphere from the air-oil exhaust grooves 18.

Test Result

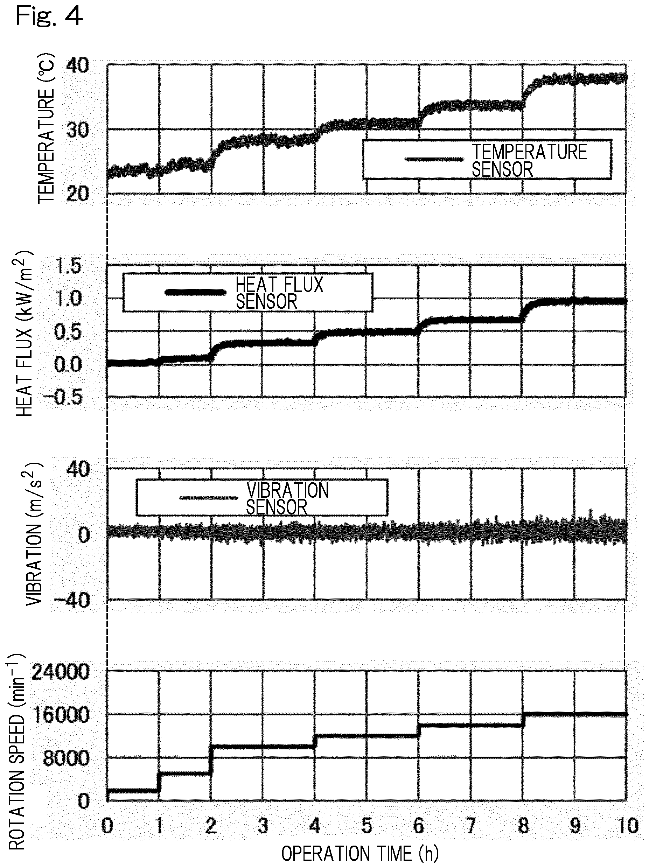

Fig. 4 illustrate various sensor outputs from the bearing apparatus in the performance evaluation test. It was confirmed that all the sensors normally operate from a low-speed range to an extremely high-speed range (dmn value: 1440000).

As described above, it is important to make sure that the respective sensors are functioning normally when the abnormality determination section 5 (Fig. 1) determines abnormality in the rolling bearing. The Applicant of the present application has conducted a test and confirmed that, as the rotation speed of the bearing apparatus is increased stepwisely from a low-speed range to an extremely high-speed range, when the respective sensors are functioning normally, the temperature, the rotation speed and the heat flux change in a predetermined relation. In view of this performance evaluation test, the abnormality determination section 5 (Fig. 1) may automatically determine that the respective sensors are functioning normally, for example, in an initial diagnosis or the like before starting operation, so that the result of the determination of whether the rolling bearing has abnormality can be more objectively employed.

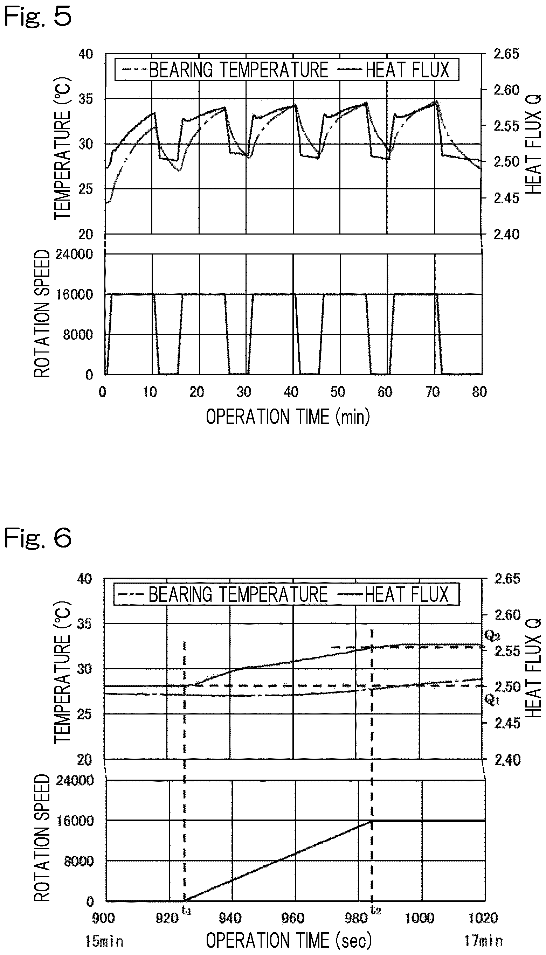

Fig. 5 and Fig. 6 show a relation between heat flux, temperature, and rotation speed in an acceleration/deceleration test. Fig. 6 is an enlarged graph of Fig. 5 in the direction of the horizontal axis. A sensor output of the heat flux sensor is more responsive to an acceleration/deceleration of the rotation speed than a sensor output of the temperature sensor and thus can improve the accuracy of abnormality detection of the rolling bearing. The sensor output of the heat flux sensor is substantially synchronized with variation of the rotation speed.

Reproducing Test of Bearing Abnormality State

A reproducing test of a bearing abnormality state was conducted to attempt detection of a sign of abnormality occurring in a rolling bearing. Table 2 shows test conditions. As with the performance evaluation test and the acceleration/deceleration test, the tester of Fig. 3 was also used in this reproducing test. In the present reproducing test, a very small amount of lubricating oil was injected to the rolling bearings only during assembly of the spindle, so that the test bearings were conditioned so as to be more likely to cause abnormality. In addition, the tester was set to automatically stop in response to actuation of a limiter when an excessive load is applied to the driving motor 12 (Fig. 3) in association with abnormality in the test bearings.

[Table 2]

| | |
|---|---|
| Test bearing | $\phi\,70 \times \phi\,110 \times 20$<br>Product equivalent to 5S-2LA-HSE014 (extremely high-speed angular ball bearing with ceramic balls) |
| Preload type | Fixed-position preload (Post-assembly preload: 750 N) |
| Rotation speed | Constant at 18000 min$^{-1}$ |
| Lubrication type | Several drops of lubricating oil injected only during assembly of spindle (no supply during spindle operation) |
| Outer cylinder cooling | With cooling (synchronized with room temperature) |
| Spindle attitude | Horizontal |

Test Result of Reproducing Test

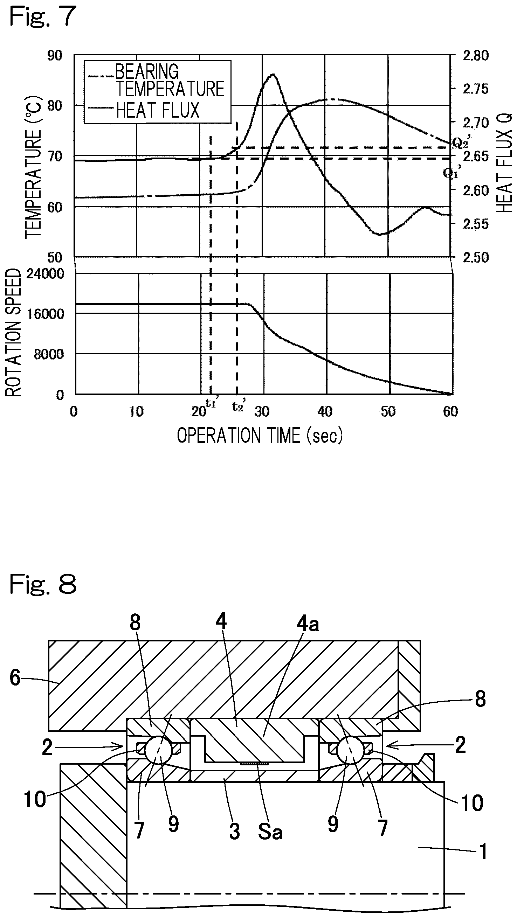

Fig. 7 illustrates a relation between heat flux, temperature, and rotation speed in a reproducing test of a bearing abnormality state. The broken line t2' shows a time when an excessive load to the driving motor 12 (Fig. 3) was detected. From the test result, it can be seen that the output values of heat flux showed an increase at an earlier point than that of temperature, suggesting that heat flux may be effectively used to detect a sign of abnormality occurring in the rolling bearing at an early stage.

On the basis of the relation between the rotation speed and the heat flux which follows the rotation speed as shown in Fig. 5 to Fig. 7, the abnormality determination section 5 (Fig. 1) determines abnormality in the rolling bearing in accordance with the following formula.

[Math 1]

$$\frac{\varDelta Q'}{\varDelta t'} = \frac{(Q_2' - Q_1')}{(t_2' - t_1')} > N \times \frac{\varDelta Q}{\varDelta t} = N \times \frac{(Q_2 - Q_1)}{(t_2 - t_1)}$$

When the above formula is satisfied, the abnormality determination section 5 (Fig. 1) determines that the rolling bearing has abnormality (large heat generation). The coefficient N in the formula depends on the spindle of the machine tool and may vary, such as N = 1, N = 100.

Effects and Advantages

According to the above-described bearing apparatus, the abnormality determination section 5 determines abnormality in the rolling bearing 2 on the basis of a relation between the rotation speed and the heat flux which follows the rotation speed. For example, the abnormality determination section 5 may determine that the rolling bearing 2 has abnormality when the heat flux rapidly changes in spite of the fact that the rotation speed is constant. For example, the abnormality determination section 5 may determine that the rolling bearing 2 has abnormality when the heat flux does not follow the rotation speed in spite of the fact that the detected rotation speed is changing. In this way, it is possible to accurately detect an instantaneous and rapid temperature rise in the rolling bearing 2 and to determine abnormality in the rolling bearing 2 on the basis of the detection result thereby. Where it is determined that the rolling bearing 2 has abnormality, it is possible to take a control action, such as to stop the rotation of the bearing apparatus.

Since the outer ring spacer 4 includes the protruding parts 4b each protruding from an axial side surface of the spacer body 4a to a position between the inner and outer rings 7, 8, and the heat flux sensor Sa is disposed at one protruding part 4b, it is possible to reduce the cost and to easily install the heat flux sensor Sa as compared with the case where the heat flux sensor is disposed on the outer ring or the like. Further, since the heat flux sensor Sa is disposed at the protruding part 4b protruding to the position between the inner and outer rings 7, 8, a temperature change inside the bearings during operation can be directly detected. Since each protruding part 4b also serves as a nozzle for discharging lubricating oil to the rolling bearing 2, an existing nozzle for discharging lubricating oil can be used to dispose the heat flux sensor Sa. Thus, it is possible to reduce the cost as compared with, for example, the case where a dedicated component is used to dispose the heat flux sensor Sa.

Other Embodiments

In the following description, the same reference numerals are used to denote parts that correspond to those previously described in the respective embodiments, and overlapping description is omitted. Where only a part of a configuration is described, the rest of the configuration is to be construed as being the same as the previously described embodiments unless otherwise indicated. The same configurations provide the same effects. It is possible not only to combine the parts that have been particularly described in the respective embodiments but also to partly combine the embodiments unless there is any hindrance to such a combination.

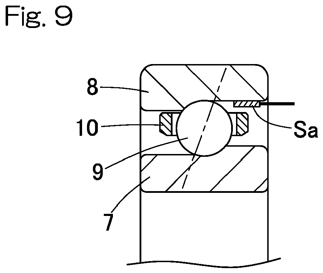

As shown in Fig. 8, the heat flux sensor Sa may be disposed on an inner peripheral surface of the spacer body 4a of the outer ring spacer 4. Further, as shown in Fig. 9, the heat flux sensor Sa may be disposed on an inner peripheral surface of the outer ring. Where the abnormality determination section 5 does not determine if the respective sensors are functioning normally, the temperature sensor Sc of the sensors may be omitted. The vibration sensor Sd may further be omitted. According to these constitutions, it is possible to simplify the structure of the bearing apparatus and to reduce the cost because the number of the sensors can be reduced.

The stationary-side raceway ring may be the inner ring 7. The stationary-side spacer may be the inner ring spacer 3. A bearing apparatus according to any of the embodiments may be applied to a machine tool having a vertical spindle 1.

Although the preferred embodiments of the present invention have been described with reference to the drawings, various additions, modifications, or deletions may be made without departing from the scope of the invention, which is defined in the appended claims.

[Reference Numerals]

2    Rolling bearing

3    Inner ring spacer

4    Outer ring spacer (stationary-side spacer)

4b   Protruding part

5    Abnormality determination section

7    Inner ring

8    Outer ring (stationary-side raceway ring)

Sa   Heat flux sensor

Sb   Rotation sensor

Sc   Temperature sensor

## Claims

1. A bearing apparatus comprising:

   a rolling bearing;
   an inner spacer axially adjacent to an inner ring of the rolling bearing;
   an outer spacer axially adjacent to an outer ring of the rolling bearing;
   a heat flux sensor disposed on a stationary-side raceway ring which is a fixed raceway ring of the inner and outer rings, or on a stationary-side spacer of the inner and outer spacers, and configured to detect a heat flux between the inner and outer rings;
   a rotation sensor configured to detect a rotation speed of the rolling bearing; and
   an abnormality determination section configured to determine abnormality in the rolling bearing on the basis of a relation between the rotation speed and the heat flux which follows the rotation speed.

2. The bearing apparatus as claimed in claim 1, wherein the abnormality determination section is configured to determine abnormality in the rolling bearing on the basis of a parameter calculated by taking a time derivative of the heat flux detected by the heat flux sensor.

3. The bearing apparatus as claimed in claim 1 or 2, wherein the stationary-side spacer includes a protruding part protruding from an axial side surface of the stationary-side spacer to a position between the inner and outer rings, and the heat flux sensor is disposed at the protruding part.

4. The bearing apparatus as claimed in claim 3, wherein the protruding part also serves as a nozzle configured to discharge lubricating oil to the rolling bearing.

5. The bearing apparatus as claimed in any one of claims 1 to 4, comprising a temperature sensor configured to detect temperature of the stationary-side spacer or the stationary-side raceway ring, wherein the abnormality determination section is configured to determine if the temperature sensor, the heat flux sensor and the rotation sensor are functioning normally on the basis of a relation between the temperature detected by the temperature sensor, the rotation speed and the heat flux.

## Patentansprüche

1. Lagervorrichtung, umfassend:

   ein Wälzlager;

einen inneren Abstandshalter, der axial an einen Innenring des Wälzlagers angrenzt;
einen äußeren Abstandshalter, der axial an einen Außenring des Wälzlagers angrenzt;
einen Wärmestromsensor, der auf einem stationärseitigen Laufbahnring, der ein fester Laufbahnring des Innen und Außenrings ist, oder auf einem stationärseitigen Abstandshalter des inneren und äußeren Abstandshalters angeordnet und dazu ausgelegt ist, einen Wärmestrom zwischen dem Innen- und Außenring zu erfassen;
einen Rotationssensor, der dazu ausgelegt ist, eine Rotationsgeschwindigkeit des Wälzlagers zu erfassen; und
einen Anomaliebestimmungsabschnitt, der dazu ausgelegt ist, Anomalien im Wälzlager basierend auf einer Beziehung zwischen der Drehzahl und dem Wärmestrom, der der Drehzahl folgt, zu bestimmen.

2. Lagervorrichtung gemäß Anspruch 1, wobei der Anomaliebestimmungsabschnitt dazu ausgelegt ist, Anomalien in dem Wälzlager basierend auf einem Parameter zu bestimmen, der anhand einer zeitlichen Ableitung des durch den Wärmestromsensor erfassten Wärmestroms berechnet wird.

3. Lagervorrichtung gemäß Anspruch 1 oder 2, wobei der stationärseitige Abstandshalter einen vorstehenden Teil aufweist, der von einer axialen Seitenfläche des stationärseitigen Abstandshalters zu einer Position zwischen dem Innen- und dem Außenring vorsteht, und der Wärmestromsensor an dem vorstehenden Teil angeordnet ist.

4. Lagervorrichtung gemäß Anspruch 3, wobei der vorstehende Teil auch als Düse dient, die dazu ausgelegt ist, Schmieröl an das Wälzlager auszugeben.

5. Lagervorrichtung gemäß einem der Ansprüche 1 bis 4, umfassend einen Temperatursensor, der dazu ausgelegt ist, die Temperatur des stationärseitigen Abstandshalters oder des stationärseitigen Laufrings zu erfassen, wobei der Anomaliebestimmungsabschnitt dazu ausgelegt ist, basierend auf einem Verhältnis zwischen der durch den Temperatursensor erfassten Temperatur, der Drehzahl und dem Wärmestrom zu bestimmen, ob der Temperatursensor, der Wärmestromsensor und der Rotationssensor normal funktionieren.

**Revendications**

1. Dispositif de palier, comprenant :

un palier à roulement ;
une entretoise intérieure qui est axialement adjacente à une bague intérieure du palier à roulement ;
une entretoise extérieure qui est axialement adjacente à une bague extérieure du palier à roulement ;
un capteur de flux thermique disposé sur une bague de roulement côté stationnaire, qui est une bague de roulement fixe des bagues intérieure et extérieure, ou sur une entretoise côté stationnaire des entretoises intérieure et extérieure, et conçu pour détecter un flux thermique entre les bagues intérieure et extérieure ;
un capteur de rotation adapté pour détecter une vitesse de rotation du palier à roulement ; et
une section de détermination d'anomalies adaptée pour déterminer des anomalies dans le palier à roulement sur la base d'une relation entre la vitesse de rotation et le flux de chaleur suivant la vitesse de rotation.

2. Dispositif de palier selon la revendication 1, dans lequel la section de détermination d'anomalies est adaptée pour déterminer des anomalies dans le palier à roulement sur la base d'un paramètre calculé à partir d'une dérivée temporelle du flux de chaleur détecté par le capteur de flux de chaleur.

3. Dispositif de palier selon la revendication 1 ou 2, dans lequel l'entretoise côté stationnaire comprend une partie en saillie qui fait saillie depuis une surface latérale axiale de l'entretoise côté stationnaire vers une position entre les bagues intérieure et extérieure, et le capteur de flux thermique est disposé sur la partie en saillie.

4. Dispositif de palier selon la revendication 3, dans lequel la partie saillante sert également de buse adaptée pour distribuer de l'huile de lubrification au palier à roulement.

5. Dispositif de palier selon l'une quelconque des revendications 1 à 4, comprenant un capteur de température configuré pour détecter la température de l'entretoise côté stationnaire ou de la bague de roulement côté stationnaire, dans lequel la section de détermination d'anomalie est configurée pour déterminer si le capteur de température, le capteur de flux thermique et le capteur de rotation fonctionnent normalement sur la base d'un rapport entre la température détectée par le capteur de température, la vitesse de rotation et le flux thermique.

## Fig. 1

ROTATION
SPEED

Sb → ROTATION SENSOR

ABNORMALITY DETERMINATION SECTION — 5

ROTATION STOP SIGNAL ETC.

HEAT FLUX TEMPERATURE

VIBRATION

4

6

Sc

Sd

4a 4b

8

8

2 →

← 2

7

7

9

Sa

4b

11

3

11

9

1

## Fig. 2

8

9

6

8a

Sc

4ba

Sd

4a 4b — 4

10a

2 →

4b

11

10

7

7a

4bb

7b

Sa

3

1

# Fig. 3

Fig. 4

Fig. 5

Fig. 6

Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018164469 A
- JP 2018022950 A
- JP 2017026078 A
- JP 2016166832 A
- JP 2009068533 A